# EUROPÄISCHE PATENTSCHRIFT

(11) **EP 0 936 374 B1**
(45) Veröffentlichungstag und Bekanntmachung des Hinweises auf die Patenterteilung: **11.01.2006**
(21) Anmeldenummer: 99100485.4
(22) Anmeldetag: 12.01.1999
(51) Int. Cl.: F16D 65/12

(54) **Verfahren und Vorrichtung zur Reduzierung von Geräuschabstrahlungen bei Bremsen**
Method and device for reducing noise emission of brakes
Procédé et dispositif pour réduire l'émission de bruit de freins

(30) Priorität: 17.02.1998 DE 19806532
(43) Veröffentlichungstag der Anmeldung: 18.08.1999
(73) Patentinhaber: Dr.Ing. h.c.F. Porsche Aktiengesellschaft, 70435 Stuttgart (DE)
(72) Erfinder: Thomas, Claus, 70736 Stuttgart (DE); Häsler, Karl, 70195 Stuttgart (DE)

(56) Entgegenhaltungen:
- EP-A- 0 872 659
- DE-A- 19 606 737
- DE-U- 8 815 843
- FR-A- 2 497 307
- GB-A- 1 219 821
- US-A- 3 575 270
- US-A- 5 238 089

## Beschreibung

Die Erfindung bezieht sich auf ein Verfahren zur Reduzierung von Geräuschabstrahlungen einer aus einem Bremsscheibentopf und einem Bremsring bestehenden Bremsscheibe, sowie auf eine Bremsscheibe zur Durchführung dieses Verfahrens.

Bei Scheibenbremsen für Kraftfahrzeuge treten im Betrieb Geräuschabstrahlungen, sogenannte Quietschgeräusche auf, die als störend empfunden werden. Zur Abhilfe dieser Geräusche sind beispielsweise aus der EP 0 872 659 Al Dämpfungseinrichtungen zwischen dem Bremsscheibentopf und dem Bremsring der Bremsscheibe bekannt, die aus einem Dämpfungsmaterial im Verbindungsbereich der beiden Bremsenteile bestehen. Des weiteren sind Massekörper am Bremssattel und die Verwendung von Dämpfungselementen zwischen einem Bremskolben und einem Bremsbelag der Bremse bekannt.

Die Aufgabe der Erfindung besteht darin, ein verbessertes Verfahren zur Reduzierung von Geräuschabstrahlungen an einer Bremsscheibe zu schaffen, das einfach durchzuführen ist und den Bremsscheibenaufbau nahezu unverändert belässt.

Diese Aufgabe wird erfindungsgemäß durch ein Verfahren gemäß Anspruch 1 sowie durch eine Bremsscheibe gemäß Anspruch 2, sowie der Unteranspruche erzielt.

Bei einer Bremsscheibe die aus einem Bremsring mit Bremsscheibentopf besteht, treten maximale Schwingungsausschläge meistens am äußeren Rand des Bremsrings auf. In diesem Bereich kann aufgrund technischer Gegebenheiten keine wirkungsvolle Dämpfung installiert werden.

Aber auch an Orten der Bremsscheibe, die eine Anbringung von Dämpfungsmitteln erlauben, wie beispielsweise am inneren Rand des Bremsringes bzw. am Bremsscheibentopf ist keine optimale Dämpfung der Bremsscheibe möglich. Eine Dämpfung von Schwingbewegungen am inneren Bereich des Bremsringes wirkt nur bei einer topfrelevanten Schwingungsform bzw. deren Eigenfrequenzen.

Mit der Erfindung wird in vorteilhafter Weise die Verschiebung der Eigenfrequenz der topfrelevanten Schwingungsform auf die Eigenfrequenz der Biegeschwingungsform des Bremsringes erzielt, so daß die sogenannten Quietschgeräusche an der Bremse wesentlich reduziert werden können.

Bei diesem erfindungsgemäßen Verfahren kann nun ein im Bereich des Bremsscheibentopfes angeordnetes Dämpfungselement in vorteilhafter Weise über die topfrelevante Schwingungsform Energie aus der Schwingungsform des Bremsringes absorbieren. Durch dieses Verfahren wird beim Dimensionieren der Bremsscheibe der Bremsscheibentopf und/oder der Bremsring beispielsweise durch eine bestimmte definierte geometrische Größe der Wandungen und/oder anderer relevanter Teile der Bremsscheibe eine gezielte Schwingungsbewegung im Übergangsbereich vom Topf zum Ring erzielt, so daß zwangsweise ein optimaler gewollter Dämpfungsort erzielt wird, an dem entsprechende Dämpfungsmittel angeordnet werden können, ohne daß die Wirkungsweise der Bremse herabgesetzt wird.

Als Dämpfungsmittel können in bevorzugter Ausführungsform beispielsweise bei einer zweigeteilten Bremsscheibe in dem Verbindungsbereich Dämpfungsmittel angeordnet sein. Desweiteren sind auch flächig und/oder punktförmig angeordnete elastische Materialien möglich.

In den Zeichnungen sind verschiedene Schwingungsbewegungen der Bremsscheibe bzw. der Bremsscheibenteile dargestellt.

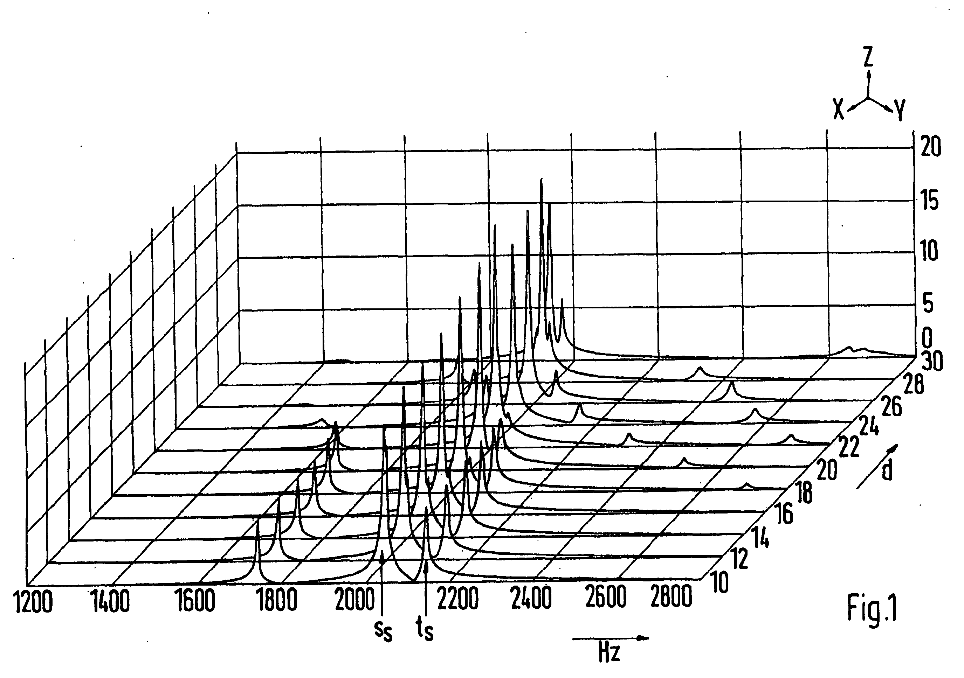

Die Bremsscheibe 1 umfaßt einen mit einem Bremsscheibentopf 2 verbundenen Bremsring 3. Diese Einheit kann einteilig oder zweigeteilt ausgeführt sein. Wie im Diagramm Fig. 1 näher gezeigt, liegen die Biegeschwingungsformen des Bremsringes in der X-Achse beispielsweise bei 2.000 Hz, deren maximale Amplitude eines äußeren Meßpunkts in der Z-Achse aufgetragen ist. Die Biegeschwingungsform des Topfes liegt bei beispielsweise ca. 2.100 Hz. In der Y-Achse sind die unterschiedlichen Wandungsdicken d des Bremsscheibentopfes 2 gezeigt, wobei zu erkennen ist, daß die beiden Schwingungsformen beispielsweise bei einer Wanddickenreduzierung von d = 2,4 mm des Bremsscheibentopfes 2 nahezu eine Überdeckung aufweisen.

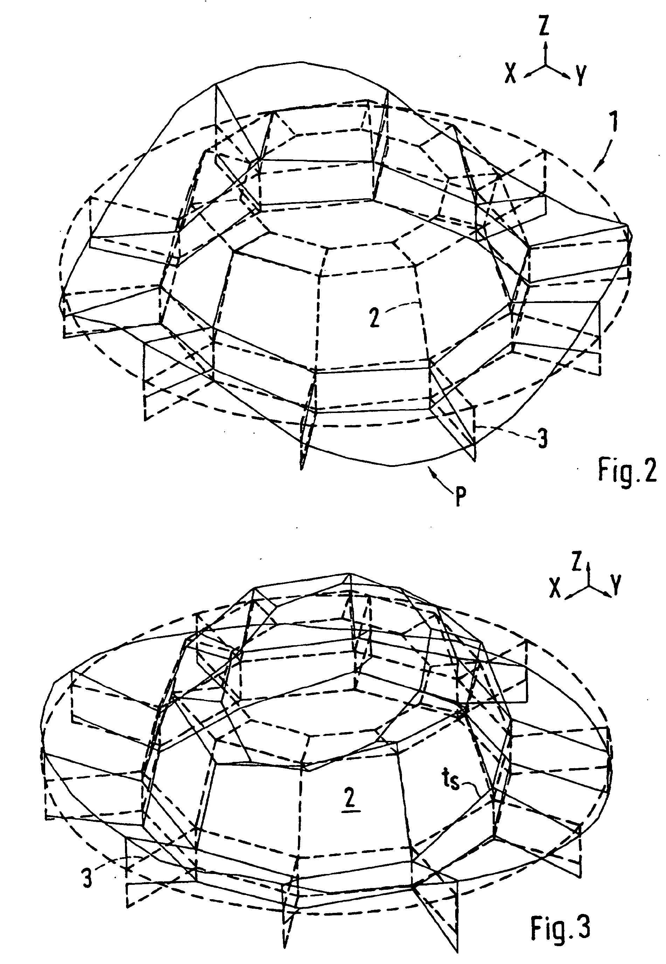

In Fig. 2 sind am Beispiel der Bremsscheibe 1 in gestrichelten Linien die stehenden Umrißkanten des Bremsringes 3 und des Bremsscheibentopfes 2 gezeigt. In den ausgezogenen Linien sind die Biegeschwingungsform des Bremsringes 3 sowie des Topfes 2 mit sogenannter scheibenrelevanter Schwingungsform sₛ dargestellt, bei der der größte Pegel P am Außendurchmesser des Bremsringes 3 auftritt.

In Fig. 3 sind in gestrichelten Linien wiederum die Bremscheiben mit Topf 2 in gestrichelten Linien dargestellt und in ausgezogenen Linien ist eine topfrelevante Schwingungsform tₛ gezeigt, bei der der Bremsscheibentopf 2 gegen den Bremsring 3 schwingt. In diesem Fall wird die Eigenfrequenz der topfrelevanten Schwingungsform tₛ auf die Eigenfrequenz der Biegeschwingungsform des Bremsringes 3, wie in Fig. 1 im Diagramm näher dargestellt, verschoben.

Durch diese Maßnahme ist es nun möglich, über die erzwungene topfrelevante Schwingungsform tₛ mittels eines Dämpferelements oder dergleichen Energie aus der Biegeschwingungsform des Bremsringes 3 zu absorbieren.

Zur praktischen Realisierung dieses Absorbtionsvorgangs ist im Topfbereich vorzugsweise im Übergang vom Topf 2 zum Bremsring 3 - bei einer zweigeteilten Bremsscheibe - zwischen Anlage- bzw. Verbindungsflächen eine Schicht aus Dämpfungsmaterial anzuordnen. Die Verbindung der beiden Bremsenteile, wie Topf 2 und Ring 3 erfolgt über Schraubmittel oder dergleichen.

Desweiteren sind bei ein- oder zweiteiligen Bremsscheiben Dämpfungselemente aus elastischen Materialien denkbar, die punkt- und/oder flächig angebracht sind und vorzugsweise im Übergangsbereich vom Topf 2 zum Ring 3 angeordnet werden.

## Patentansprüche

1. Verfahren zur Reduzierung von Geräuschabstrahlungen einer aus einem Bremsscheibentopf (2) und einem Bremsring (3) bestehenden Bremsscheibe, wobei der Bremsscheibentopf (2) und der Bremsring (3) jeweils mehrere eigene Schwingungsformen aufweisen und jeder Schwingungsform eine Eigenfrequenz entspricht, **dadurch gekennzeichnet, dass**
- im Übergangsbereich vom Bremsscheibentopf (2) zum Bremsring (3) die Eigenfrequenz einer Schwingungsform des Bremsscheibentopfes (2) mit der Eigenfrequenz einer korrespondierenden Biegeschwingungsform des Bremsringes (3) in Übereinstimmung ist, wobei
- die gemeinsame Eigenfrequenz so gewählt ist, dass die Schwingungsform des Bremsscheibentopfes (2) und die korrespondierende Biegeschwingungsform des Bremsringes (3) am Übergang vom Bremsscheibentopf (2) zum Bremsring eine gezielte Bewegung erzeugt, und wobei
- am Übergang vom Bremsscheibentopf (2) zum Bremsring (3) mindestens ein Dämpfungselement angeordnet ist.

2. Bremsscheibe zur Durchführung des Verfahrens nach Anspruch 1, **dadurch gekennzeichnet, dass** der Bremsscheibentopf (2) mit dem Bremsring (3) im Übergangsbereich mittels Befestigungselementen verbunden ist.

3. Bremsscheibe nach Anspruch 2, **dadurch gekennzeichnet, dass** zwischen den Anlageflächen von Bremsscheibentopf (2) und Bremsring (3) am Übergang vom Bremsscheibentopf (2) zum Bremsring (3) eine Zwischenlage aus einem Dämpfungsmaterial angeordnet ist.

4. Bremsscheibe nach Anspruch 2 oder 3, **dadurch gekennzeichnet, dass** der Bremsscheibentopf (2) und der Bremsring (3) einteilig ausgebildet sind.

5. Bremsscheibe nach einem der Ansprüche 2 bis 4, **dadurch gekennzeichnet, dass** im Bremsscheibentopf (2) und/oder an dem Bremsring (3) mindestens ein Dämpfungselement angeordnet ist.

6. Bremsscheibe nach Anspruch 5, **dadurch gekennzeichnet, dass** das Dämpfungselement aus einem elastischen Material besteht und punkt- und/oder flächenförmig angeordnet ist.

## Claims

1. A method of reducing noise radiation of a brake disc comprising a brake-disc chamber (2) and a brake ring (3), wherein the brake-disc chamber (2) and the brake ring (3) have a multiplicity of natural oscillation modes in each case and a natural frequency corresponds to each oscillation mode, **characterized in that**
- in the transition region from the brake-disc chamber (2) to the brake ring (3) the natural frequency of an oscillation mode of the brake-disc chamber (2) conforms to the natural frequency of a corresponding flexural oscillation mode of the brake ring (3), wherein
- the common natural frequency is selected in such a way that the oscillation mode of the brake-disc chamber (2) and the corresponding flexural oscillation mode of the brake ring (3) at the transition from the brake-disc chamber (2) to the brake ring produces a purposeful movement, and wherein
- at least one damping element is arranged at the transition from the brake-disc chamber (2) to the brake ring (3).

2. A brake disc for performing the method according to Claim 1, **characterized in that** the brake-disc chamber (2) is connected to the brake ring (3) in the transition region by means of fastening elements.

3. A brake disc according to Claim 2, **characterized in that** an intermediate layer of a damping material is arranged between the abutment faces of the brake-disc chamber (2) and the brake ring (3) at the transition from the brake-disc chamber (2) to the brake ring (3).

4. A brake disc according to Claim 2 or 3, **characterized in that** the brake-disc chamber (2) and the brake ring (3) are constructed in one piece.

5. A brake disc according to any one of Claims 2 to 4, **characterized in that** at least one damping element is arranged in the brake-disc chamber (2) and/or on the brake ring (3).

6. A brake disc according to Claim 5, **characterized in that** the damping element consists of a resilient material and is provided in the form of dots and/or a surface.

## Revendications

1. Procédé pour réduire l'émission de bruit d'un disque de freinage composé d'un pot de disques de freinage (2) et un cylindre de freinage (3) dans lequel le pot de disques de freinage (2) et le cylindre de freinage (3) comportent chaque fois plusieurs modes d'oscillation et chaque mode d'oscillation correspond à une fréquence de résonance, **caractérisé en ce que**
- dans la zone de transition du pot de disques de freinage (2) au cylindre de freinage (3) la fréquence de résonance d'un mode d'oscillation d'un pot de disques de freinage (2) correspond à la fréquence de résonance d'une mode d'oscillation correspondant du cylindre de freinage (3), sachant que
- la fréquence de résonance commune est choisie de telle manière que la forme de l'oscillation du pot de disques de freinage (2) et le mode d'oscillation correspondant du cylindre de freinage (3) produit à la transition du pot de disques de freinage (2) et du cylindre de freinage un mouvement visé et sachant que
- à la transition du pot de disques de freinage (2) et du cylindre de freinage (3) est disposé au moins un élément d'amortissement.

2. Disque de freinage pour la réalisation du procédé selon la revendication 1,**caractérisé en ce que** le pot de disques de freinage (2) est relié au cylindre de freinage (3) dans la zone de transition par des éléments de fixation.

3. Disque de freinage selon la revendication 2,**caractérisé en ce qu'**entre les moyeux du pot de disques de freinage (2) et le cylindre de freinage (3) à la transition du pot de disques de freinage (2) au cylindre de freinage (3) est disposé une couche intermédiaire de matériau d'amortissement.

4. Disque de freinage selon les revendications 2 ou 3, **caractérisé en ce que** le pot de disques de freinage (2) et le cylindre de freinage (3) sont monoblocs.

5. Disque de freinage selon l'une des revendications 2 à 4, **caractérisé en ce que** au moins un élément d'amortissement est disposé dans le pot de disques de freinage (2) et/ou dans le cylindre de freinage (3).

6. Disque de freinage selon la revendication 5, **caractérisé en ce que** l'élément d'amortissement se compose d'un matériau élastique et est disposé sous forme de surface plane ou de points.
